# EUROPEAN PATENT APPLICATION

(11) **EP 4 622 196 A1**
(43) Date of publication of application: **24.09.2025**
(21) Application number: 22966062.6
(22) Date of filing: 21.11.2022
(51) Int. Cl.: H04L 27/00

(54) **INFORMATION INDICATION METHOD, INFORMATION PROCESSING METHOD, RELATED APPARATUS AND SYSTEM**

(71) Applicant: Shenzhen Yinwang Intelligent Technologies Co., Ltd., Shenzhen, Guangdong 518129 (CN)
(72) Inventor: WEI, Xiangfei, Shenzhen, Guangdong 518129 (CN); LIAO, Xiaotong, Shenzhen, Guangdong 518129 (CN)
(74) Representative: Körber, Martin Hans
(86) International application number: PCT/CN2022/133328
(87) International publication number: WO 2024/108360

(57) **Abstract**

This application provides an information indication method, an information processing method, a related apparatus, and a system, and may be applied to a vehicle or another terminal equipped with a sensing device, to indicate whether an obstruction that hinders the sensing device from transmitting or receiving a signal needs to be cleaned. The method includes: determining an environment in which the terminal is located; determining, based on the environment, whether an obstruction that hinders the sensing device from transmitting or receiving a signal needs to be cleaned; and sending indication information, where the indication information indicates whether the obstruction needs to be cleaned. According to the method, whether the obstruction that hinders the sensing device from transmitting or receiving a signal needs to be cleaned is indicated based on the environment. In this way, a suggestion for cleaning the obstruction can be output to a user, to help the user determine whether the obstruction needs to be cleaned, thereby improving user experience.

## Description

### TECHNICAL FIELD

This application relates to the field of sensor technologies, and in particular, to an information indication method, an information processing method, a related apparatus, and a system.

### BACKGROUND

Radars are usually used on vehicles to measure distances, speeds, and angles to assist the vehicles in autonomous driving. However, the vehicles travel in complex environments, and usually travel on rainy days or on mud roads. A surface of a radome or fascial of a radar may be obstructed by rain, snow, mud, or the like. This may hinder the radar from transmitting and receiving signals, causing degradation in detection performance of the radar, affecting accuracy of measurement results, and consequently affecting safety of autonomous driving.

Currently, a radar can recognize whether the radar is obstructed and can respond when the radar is obstructed. For example, in an autonomous driving mode, when it is recognized that the radar is obstructed, the autonomous driving mode may be exited, or an autonomous driving level may be lowered. However, if nothing is done to the obstructed radar, a detection result of the radar may be always in an inaccurate state, which cannot well assist the vehicle in autonomous driving. In this case, the autonomous driving level of the vehicle may not be raised for a long period of time, resulting in poor user experience.

### SUMMARY

This application provides an information indication method, an information processing method, a related apparatus, and a system, to restore radar detection performance in time to obtain an accurate detection result.

According to a first aspect, this application provides an information indication method. The method may be applied to a sensing device such as a radar or a camera. The sensing device is configured on a terminal such as a vehicle or an unmanned aerial vehicle. The method may be performed by the sensing device, or may be performed by a component (such as a chip, a chip system, or a processor) configured in the sensing device, or may be implemented by a logic module or software that can implement all or some functions of the sensing device. This is not limited in this application.

The method includes: determining an environment in which the terminal is located; determining, based on the environment, whether an obstruction that hinders the sensing device from transmitting or receiving a signal needs to be cleaned; and sending indication information, where the indication information indicates whether the obstruction needs to be cleaned.

The environment in which the terminal is located includes but is not limited to a weather condition at a spatial position at which the terminal is located and/or an obstacle condition in a preset spatial range in which the terminal is located. For example, the environment in which the terminal is located may be a rainy day, a foggy day, a sunny day, close to an obstacle, closed space, open space, a muddy road, a waterlogged road, a jungle, or the like.

The sensing device may determine, based on the environment in which the terminal is located, whether the obstruction that hinders the sensing device from transmitting or receiving a signal needs to be cleaned, and send the corresponding indication information.

Based on the foregoing technical content, as the sensing device may determine, based on the environment in which the terminal is located, whether the obstruction needs to be cleaned, suggestions for dealing with the obstruction may be differentiated based on different environments in which the terminal is located. Indication information indicating that an obstruction needs to be cleaned is sent in an environment in which the obstruction needs to be cleaned, and indication information indicating that an obstruction does not need to be cleaned is sent in an environment in which the obstruction does not need to be cleaned, providing a proper suggestion for a user, thereby improving user experience. When the obstruction needs to be cleaned, the user may be prompted to perform cleaning, avoiding interference on a detection result of the sensing device, so that detection performance of the sensing device can be restored, and therefore an accurate detection result can be obtained, providing support for driving safety, and assisting the vehicle in autonomous driving, thereby improving user experience.

With reference to the first aspect, in some possible implementations of the first aspect, the determining, based on the environment, whether an obstruction that hinders the sensing device from transmitting or receiving a signal needs to be cleaned includes: determining, based on the environment when the sensing device is obstructed, whether the obstruction that hinders the sensing device from transmitting or receiving a signal needs to be cleaned.

Optionally, the determining an environment in which the terminal is located includes: determining, when the sensing device is obstructed by the obstruction, the environment in which the terminal is located.

After being obstructed by the obstruction, the sensing device may determine the environment in which the terminal is located, and determine, based on the environment in which the terminal is located, whether the obstruction needs to be cleaned. Alternatively, the sensing device may first determine the environment in which the terminal is located, and determine, based on the environment after being obstructed by the obstruction, whether the obstruction needs to be cleaned.

It should be understood that a sequence in which the sensing device determines the environment in which the terminal is located and the sensing device determines whether the sensing device is obstructed is not limited in this application.

With reference to the first aspect, in some possible implementations of the first aspect, the indication information further indicates a degree to which the sensing device is obstructed by the obstruction.

The indication information sent by the sensing device may indicate the degree to which the sensing device is obstructed. In this case, the terminal can make a proper decision based on the obstruction degree. For example, a vehicle with an autonomous driving function may adjust different driving levels based on different obstruction degrees. Different obstruction degrees may also help the user select a manner of dealing with the obstruction. For example, for a low obstruction degree, although the user may be prompted to deal with the obstruction, the user may also select whether to deal with the obstruction immediately. In this case, the indication information may provide more abundant information, to help the terminal make a more proper decision, improving user experience to a greater extent.

In a possible case, the indication information indicates one of the following: the sensing device is not obstructed; the sensing device is partially obstructed, and the obstruction needs to be cleaned; the sensing device is partially obstructed, and the obstruction does not need to be cleaned; the sensing device is fully obstructed, and the obstruction needs to be cleaned; or the sensing device is fully obstructed, and the obstruction does not need to be cleaned.

The degree to which the sensing device is obstructed by the obstruction may include a plurality of predefined levels, for example, may include three levels: no obstruction, partial obstruction, and severe obstruction. The indication information sent by the sensing device may indicate a corresponding obstruction degree level.

It should be understood that a quantity and type of obstruction degree levels of the sensing device are not limited in this application.

With reference to the first aspect, in some possible implementations of the first aspect, the terminal is a vehicle, and the vehicle is equipped with a human-machine interface (human-machine interface, HMI); and the sending indication information includes: sending the indication information to the HMI, where the indication information is for the HMI to generate an instruction for prompting a user.

With reference to the first aspect, in some possible implementations of the first aspect, the sensing device belongs to an autonomous driving system of the terminal; and the sending indication information includes: sending the indication information to a control unit of the autonomous driving system.

With reference to the first aspect, in some possible implementations of the first aspect, the determining, based on the environment, whether an obstruction that hinders the sensing device from transmitting or receiving a signal needs to be cleaned includes: determining, when the environment is a preset environment, that the obstruction that hinders the sensing device from transmitting or receiving a signal does not need to be cleaned.

The preset environment may include a rainy environment, a close-to-obstacle environment, and the like. In a rainy environment, the sensing device is obstructed by rain, and the rain naturally evaporates and disappears after the sensing device is away from the rainy environment. In this case, the obstruction does not need to be cleaned. In a close-to-obstacle environment, the sensing device is obstructed by an obstacle, and the obstruction disappears after the terminal is away from the obstacle. In this case, the obstruction does not need to be cleaned.

The sensing device may determine whether the environment in which the terminal is located is the preset environment. When the terminal is in the preset environment, regardless of whether the sensing device is obstructed by the obstruction, the sensing device may determine that the obstruction does not need to be cleaned.

In a possible case, the preset environment includes a rainy environment; and the method further includes: determining, based on a weather forecast and/or a working status of a wiper, that the environment in which the terminal is located is the rainy environment.

The sensing device may determine, based on the weather forecast and/or a working status of one or more other devices on the terminal, the environment in which the terminal is located. For example, the sensing device may obtain information about the weather forecast, and the sensing device may determine, when the weather forecast indicates a rainy day, that the terminal is in a rainy environment; or the sensing device may determine, when the wiper of the terminal is in operation, that the terminal is in a rainy environment; or based on both the weather forecast and the status of the wiper of the terminal, the sensing device may determine, when the weather forecast indicates a rainy day and the wiper is in operation, that the terminal is in a rainy environment.

In a possible case, the preset environment includes an environment of parking close to an obstacle, and the terminal is equipped with one or more sensing devices; and the method further includes: determining, based on information about the environment sensed by the one or more sensing devices, that the environment in which the terminal is located is the environment of parking close to the obstacle.

The sensing device is obstructed by the obstruction when the terminal is in the preset environment, for example, a rainy environment or an environment of parking close to an obstacle, and the obstruction disappears when the terminal is away from the environment. In this case, the sensing device may determine that the obstruction does not need to be cleaned, and may further prompt the user that the obstruction does not need to be cleaned. This can improve user experience.

According to a second aspect, this application provides an information processing method. The method may be applied to a processing device, for example, a microcontroller (micro controller unit, MCU) configured on a terminal. The terminal may be, for example, a vehicle or an unmanned aerial vehicle. The method may be performed by the processing device, or may be performed by a component (such as a chip, a chip system, or a processor) configured in the processing device, or may be implemented by a logic module or software that can implement all or some functions of the processing device. This is not limited in this application.

The method includes: receiving indication information, where the indication information indicates whether an obstruction that hinders a sensing device from transmitting or receiving a signal needs to be cleaned; and outputting an instruction based on the indication information, where the instruction indicates whether the obstruction needs to be cleaned.

Based on the foregoing technical content, the processing device may receive the indication information sent by the sensing device, and output the corresponding instruction to the user. In this case, the user may determine, based on the output instruction, whether the obstruction that hinders the sensing device from transmitting or receiving a signal needs to be cleaned. This can improve user experience.

Optionally, the indication information further indicates a degree to which the sensing device is obstructed by the obstruction, and the instruction further indicates the degree to which the sensing device is obstructed by the obstruction.

The instruction output by the processing device further indicates a degree to which the sensing device is obstructed by the obstruction. In this case, the user can further select, based on the obstruction degree, a policy for dealing with the obstruction.

With reference to the second aspect, in some possible implementations of the second aspect, the instruction is a text instruction, and the outputting an instruction based on the indication information includes: generating the text instruction based on the indication information; and displaying the text instruction through a display.

The processing device may generate the text instruction based on the received indication information, and display the instruction through the display. The display may be configured on the processing device, or may be disposed separately.

With reference to the second aspect, in some possible implementations of the second aspect, the instruction is a voice instruction, and the outputting an instruction based on the indication information includes: generating the voice instruction based on the indication information; and playing the voice instruction through a speaker.

The processing device may generate the voice instruction based on the received indication information, and play the instruction through the speaker. The speaker may be configured on the processing device, or may be disposed separately.

Based on the foregoing content, after processing the indication information, the processing device may perform output in a form that is easily understood by the user, and the user may easily determine, based on the output instruction, whether the obstruction that hinders the sensing device from transmitting or receiving a signal needs to be cleaned. This can improve user experience.

According to a third aspect, this application provides a sensing device, including modules or units configured to implement the method in the first aspect or any one of the possible implementations of the first aspect. It should be understood that the modules or units may implement corresponding functions by using software and/or hardware.

For example, the sensing device includes a processing module and a sending module. The processing module is configured to determine an environment in which the terminal is located, and further configured to determine, based on the environment, whether an obstruction that hinders the sensing device from transmitting or receiving a signal needs to be cleaned. The sending module is configured to send indication information, where the indication information indicates whether the obstruction needs to be cleaned.

According to a fourth aspect, this application provides a sensing device. The sensing device includes a processor. The processor is configured to perform the method performed by the sensing device in the foregoing aspects.

The sensing device may further include a memory configured to store instructions and data. The memory is coupled to the processor. When the processor executes the instructions stored in the memory, the method performed by the sensing device in the foregoing aspects may be implemented. The device may further include a communication interface. The communication interface is configured for the device to communicate with another device. For example, the communication interface may be a transceiver, a circuit, a bus, a module, or another type of communication interface.

In a possible implementation, the sensing device according to the third aspect or the fourth aspect is a radar.

According to a fifth aspect, this application provides a processing device, including modules or units configured to implement the method in the second aspect or any one of the possible implementations of the second aspect. It should be understood that the modules or units may implement corresponding functions by using software and/or hardware.

For example, the processing device includes a receiving module and an output module. The receiving module is configured to receive indication information, where the indication information indicates whether an obstruction that hinders a sensing device from transmitting or receiving a signal needs to be cleaned. The output module is configured to output an instruction based on the indication information, where the instruction indicates whether the obstruction needs to be cleaned.

According to a sixth aspect, this application provides a processing device. The processing device includes a processor. The processor is configured to perform the method performed by the processing device in the foregoing aspects.

The processing device may further include a memory configured to store instructions and data. The memory is coupled to the processor. When the processor executes the instructions stored in the memory, the method performed by the processing device in the foregoing aspects may be implemented. The device may further include a communication interface. The communication interface is configured for the device to communicate with another device. For example, the communication interface may be a transceiver, a circuit, a bus, a module, or another type of communication interface.

According to a seventh aspect, this application provides an autonomous driving system, including the sensing device in the third aspect or the fourth aspect. Optionally, the autonomous driving system further includes the processing device in the fifth aspect or the sixth aspect.

According to an eighth aspect, this application provides a terminal device, including the sensing device in the third aspect or the sixth aspect, and the processing device in the fourth aspect or the seventh aspect.

According to a ninth aspect, this application provides a computer-readable storage medium, including a computer program. When the computer program is run, the method performed by the sensing device in the foregoing aspects is performed, or the method performed by the processing device in the foregoing aspects is performed.

According to a tenth aspect, this application provides a computer program product. The computer program product includes a computer program (which may also be referred to as code or instructions). When the computer program is run, the method performed by the sensing device in the foregoing aspects is performed, or the method performed by the processing device in the foregoing aspects is performed.

It should be understood that the technical solutions of the third aspect to the tenth aspect of this application correspond to the technical solutions of the first aspect and the second aspect of this application, and beneficial effects achieved in the aspects and corresponding feasible implementations are similar. Details are not described again.

### BRIEF DESCRIPTION OF DRAWINGS

FIG. 1 is a diagram of an architecture of a sensing device according to an embodiment of this application;
FIG. 2 is a diagram of a structure of an autonomous driving system according to an embodiment of this application;
FIG. 3 is a diagram of a sensing device obstructed by an obstruction according to an embodiment of this application;
FIG. 4 is a schematic flowchart of an information indication method according to an embodiment of this application;
FIG. 5 is a schematic flowchart of a radar on a vehicle determining whether there is a need to deal with an obstruction and sending indication information according to an embodiment of this application;
FIG. 6 is an example of a vehicle in a rainy environment according to an embodiment of this application;
FIG. 7 is a schematic flowchart of a radar sending indication information when a vehicle is in a rainy environment according to an embodiment of this application;
FIG. 8 is an example of a vehicle in a close-to-obstacle environment according to an embodiment of this application;
FIG. 9 is a schematic flowchart of a radar sending indication information when a vehicle is in a close-to-obstacle environment according to an embodiment of this application;
FIG. 10 is a schematic flowchart of an information processing method according to an embodiment of this application;
FIG. 11 is a block diagram of a sensing device according to an embodiment of this application;
FIG. 12 is another block diagram of a sensing device according to an embodiment of this application;
FIG. 13 is a block diagram of a processing device according to an embodiment of this application; and
FIG. 14 is another block diagram of a processing device according to an embodiment of this application.

### DESCRIPTION OF EMBODIMENTS

The following describes technical solutions in this application with reference to the accompanying drawings.

It should be understood that tables in embodiments of this application are merely examples, and do not constitute a limitation on the protection scope of this application. For example, values of information in the tables are merely examples, and other values may be configured. This is not limited in this application. In another example, the tables in this specification may be appropriately transformed and adjusted, for example, split or merged. In still another example, a name of a parameter shown in a title in each table may be another name that can be understood by the sensing device, and a value or an expression manner of the parameter may be another value or expression manner that can be understood by the sensing device.

In embodiments of this application, "predefined", "preset", or "preconfigured" may be implemented by pre-storing corresponding code, tables, or another manner for indicating related information in a device. A specific implementation is not limited in this application. "Storage" may be storage in one or more memories. The one or more memories may be separately disposed, or may be integrated into an encoder or a decoder, a processor, or a sensing device. Alternatively, some of the one or more memories may be separately disposed, and some of the one or more memories may be integrated into a decoder, a processor, or a sensing device. A type of the memory may be a storage medium in any form. This is not limited in this application.

An information indication method provided in this application may be applied to a sensing device for object detection based on an electromagnetic wave or a sound wave, such as a millimeter wave radar, a lidar, a camera, or an ultrasonic detector. This is not limited in this application. The sensing device may actively transmit a signal and receive an echo signal to perform target detection, for example, may be a millimeter wave radar. Alternatively, the sensing device may receive a signal from an environment to sense the environment, for example, may be a camera.

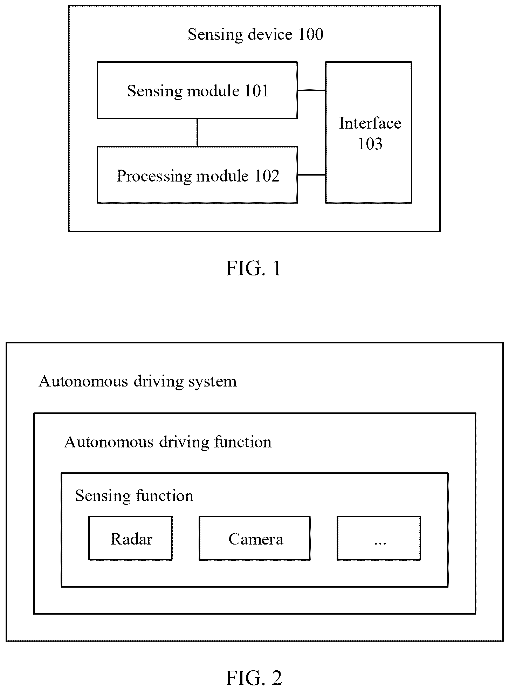

FIG. 1 is a diagram of an architecture of a sensing device according to an embodiment of this application.

As shown in FIG. 1, a sensing device 100 may include a sensing module 101, a processing module 102, and an interface 103.

The sensing module 101 may be configured to sense a surrounding environment to obtain a detection result. For example, the sensing device 100 may be a radar, and the sensing module 101 may include a signal transmitting unit, a signal receiving unit, and a signal processing unit. The signal transmitting unit of the radar may be a transmit antenna configured to transmit a signal. The signal receiving unit may be a receive antenna configured to receive an echo signal obtained after an object reflects a signal transmitted by the transmit antenna. The signal processing unit may be a processor configured to process an echo signal to perform target detection.

The processing module 102 may determine, based on a detection result of the sensing module 101, whether the sensing device 100 is obstructed, or determine a degree to which the sensing device 100 is obstructed.

The interface 103 may output a processing result of the processing module 102 and/or output a detection result of the sensing module 101.

It should be understood that FIG. 1 is merely an example of the sensing device in this application, but cannot be construed as a limitation on this application. In some embodiments, functions of modules and units in the sensing device may be implemented by a same component. For example, the sensing device may include one or more processors that may implement functions of a signal processing module and the signal processing unit in the sensing module. In some embodiments, modules and units in the sensing device may be located in different devices, and functions of the modules and units may be implemented by modules or units in the different devices. For example, in an autonomous driving system of a vehicle, a function of the sensing module may be implemented by a radar or a camera, and a function of the processing module may be implemented by an MCU of the vehicle.

FIG. 2 is a diagram of a structure of an autonomous driving system according to an embodiment of this application. The autonomous driving system shown in FIG. 2 may implement an autonomous driving function, and the autonomous driving function includes a sensing function. The sensing function may be implemented by using a device such as a camera or a radar, to complete sensing and recognition of a surrounding environment to obtain environment information.

Optionally, the autonomous driving system may further include a processing device that may process information obtained by using a camera, a radar, or the like.

It should be understood that FIG. 2 is merely an example of the autonomous driving system in embodiments of this application, but cannot be construed as a limitation on this application.

The following describes an application scenario according to an embodiment of this application with reference to the accompanying drawing.

On a terminal such as a vehicle, an airplane, an unmanned aerial vehicle, or a robot, environment information (such as a terrain or an obstacle) or status information (such as a speed or a position) of the terminal may be detected by using a sensing device (such as a millimeter wave radar, a lidar, a camera, or an ultrasonic detector), to adjust an operation behavior of the terminal. In a complex environment, for example, on a rainy or snowy day, the sensing device may be obstructed by an obstruction, and signal transmission or reception by the sensing device may be affected. Consequently, a detection result is inaccurate, causing degradation in detection performance.

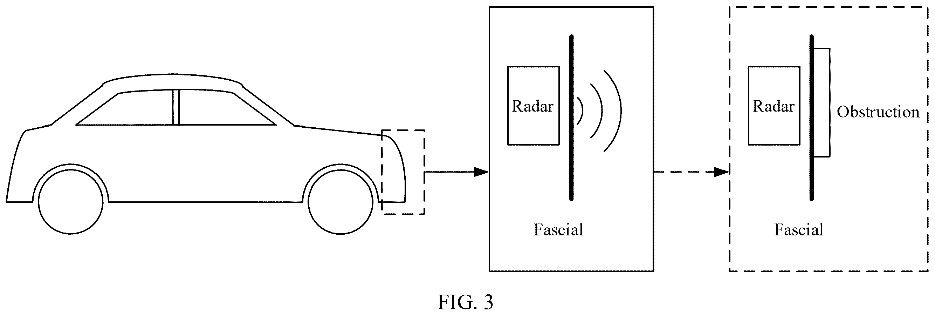

For example, as shown in FIG. 3, during autonomous driving of a vehicle, a speed and a distance may be measured by using a millimeter wave radar. The radar is usually mounted behind a fascial of the vehicle. When the vehicle is traveling, after a surface of the fascial is obstructed by an obstruction such as rain, mud, or leaves, millimeter waves transmitted and received by the radar are blocked. As a result, detection performance of the radar is degraded or lost, affecting safety of autonomous driving.

It is found through analysis by researchers that, for an obstruction caused by rain or by proximity to an obstacle, after the terminal is away from the rainy environment or away from the obstacle, the obstruction disappears, and detection performance of the sensing device may be restored as the obstruction disappears, and in this case, there is no need to deal with the obstruction; however, for an obstruction caused by mud or a stain that does not disappear naturally, if nothing is done to the obstruction, detection performance of the sensing device is always affected and cannot be restored. In an autonomous driving scenario, an autonomous driving mode may be downgraded or exited as the sensing device is obstructed. If nothing is done to the obstruction of the sensing device, the autonomous driving mode cannot be restored, resulting in poor user experience.

Embodiments of this application provide an information indication method. Whether an obstruction that hinders a sensing device from transmitting or receiving a signal needs to be cleaned is determined based on an environment in which the sensing device is located, and indication information is sent to indicate whether there is a need to deal with the obstruction. A suggestion for dealing with the obstruction can be effectively provided for the user by determining whether there is a need to deal with the obstruction and sending the indication information indicating whether there is a need to deal with the obstruction. The user can deal with the obstruction correspondingly based on the indication information, so that detection performance of the sensing device can be restored, and therefore an accurate detection result can be obtained, providing support for driving safety, and assisting the vehicle in autonomous driving, thereby improving user experience.

The following describes in detail the method provided in this application with reference to the accompanying drawings.

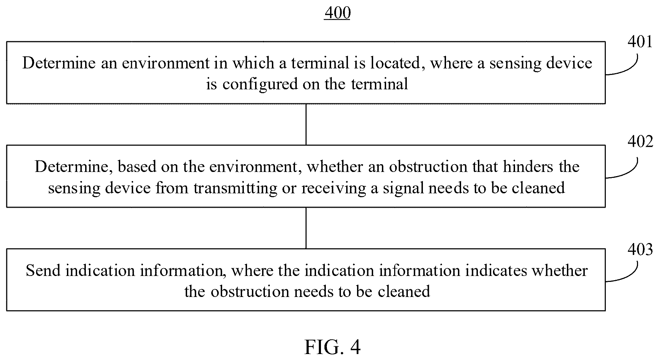

FIG. 4 is a schematic flowchart of an information indication method according to an embodiment of this application.

The method shown in FIG. 4 may be performed by a sensing device, for example, by a radar, or may be performed by a component (such as a chip, a chip system, or a processor) in a sensing device, or may be performed by another device (for example, a processing device that is independent of a sensing device and that has a communication connection) that can obtain data of a sensing device. This is not limited in this application.

For example, the sensing device may be a millimeter wave radar, a lidar, a camera, or an ultrasonic detector, and these sensing devices may be configured on a terminal. The terminal may be a vehicle, an unmanned aerial vehicle, a robot, or the like, for example, may be a vehicle equipped with an autonomous driving system. It should be understood that a type and a form of the terminal are not specifically limited in this application.

In a specific example, the sensing device may be a sensing device configured on a vehicle, such as an on-board radar or an on-board camera, and the vehicle is equipped with a plurality of sensing devices, such as a millimeter wave radar (radar), a lidar (lidar), and a camera.

The following is merely an example that describes the method provided in embodiments of this application using the sensing device as an execution body. It should be understood that the sensing device may be a sensing device that senses a surrounding environment by transmitting and receiving signals, such as the foregoing millimeter wave radar, lidar, or ultrasonic detector.

The method 400 shown in FIG. 4 includes step 401 to step 403. The following describes in detail the steps in the method 400.

Step 401: Determine an environment in which a terminal is located.

As described above, the terminal may be a movable terminal such as a vehicle, an unmanned aerial vehicle, or a robot. A sensing device may be configured on the terminal. The sensing device may detect an environment in which the terminal is located or detect a status of an object near the terminal, to adjust a behavior of the terminal.

The environment in which the terminal is located includes but is not limited to a weather condition at a spatial position at which the terminal is located and/or an obstacle condition in a preset spatial range in which the terminal is located. For example, the environment in which the terminal is located may be a rainy day, a foggy day, a sunny day, close to an obstacle, closed space, open space, a muddy road, a waterlogged road, a jungle, or the like. It should be understood that this application is not limited thereto. Based on the environment, whether the sensing device on the terminal is possibly or inevitably obstructed by an obstruction may be determined.

The following schematically provides a method for determining, by the sensing device, the environment in which the terminal is located.

A possible implementation of determining, by the sensing device, the environment in which the terminal is located is that: the sensing device determines, based on detection data of the sensing device, the environment in which the terminal is located.

For example, the sensing device may be a camera. The camera may capture an image of an environment near the terminal, and may match the captured image with a predefined image, to determine the environment in which the terminal is located. Alternatively, the camera may recognize, by using a neural network model, content of an image captured by the camera, to determine the environment in which the terminal is located. For example, when the terminal is in a rainy day scenario, the camera may determine, based on a captured image of the rainy day, that the terminal is in a rainy environment; or when the terminal is close to an obstacle, the camera may determine, based on a captured image of the obstacle, that the terminal is in a close-to-obstacle environment.

In another example, the sensing device may be a lidar. The lidar may obtain point cloud data based on a received echo signal reflected by a surrounding object, and perform recognition based on the point cloud data, to determine the environment in which the terminal is located. For example, when the terminal is close to an obstacle, the lidar may establish a point cloud model of the obstacle based on a received echo signal, and may determine, by recognizing content of the point cloud model, that the terminal is in a close-to-obstacle environment.

For a specific implementation of determining, by the sensing device based on the detection data, the environment in which the terminal is located, refer to a specific implementation of determining an environment based on detection data in the conventional technology. The foregoing described manners are merely examples, and do not constitute a limitation on this application.

Another possible implementation of determining, by the sensing device, the environment in which the terminal is located is that: the sensing device determines, based on detection data from another sensing device and/or a working status of another device, the environment in which the terminal is located. As described above, a plurality of sensing devices may be configured on the terminal. The another sensing device may be, for example, another sensing device configured on the terminal, or may be a sensing device independent of the terminal, for example, a roadside device. This is not limited in this application. The sensing device may obtain detection data of another sensing device, and determine, based on the detection data of the another sensing device, the environment in which the terminal is located.

There may be a plurality of manners of obtaining, by the sensing device, detection data of another sensing device. For example, the terminal may fuse data of all sensing devices by using a processing device, for example, an MCU, and the sensing device may obtain fused detection data from the processing device. In another example, the sensing device may directly obtain the detection data from another sensing device. This is not limited in embodiments of this application.

For example, an ambient humidity sensor may be configured on the terminal. The sensing device may obtain, from the terminal or the ambient humidity sensor, ambient humidity data detected by the sensor, and determine whether the humidity data is greater than a predefined humidity threshold, to determine whether the terminal is in a rainy environment.

A method for determining, by the sensing device based on detection data of another sensing device, the environment in which the terminal is located may be the same as the method for determining, by the sensing device based on detection data of the sensing device, the environment in which the terminal is located, and details are not described herein again.

Alternatively, the sensing device may determine, based on a working status of another device on the terminal, the environment in which the terminal is located. Another device on the terminal may include but is not limited to: a fog light or a wiper.

In an example, when the terminal is a vehicle, the sensing device may obtain status information about whether a wiper on the vehicle is turned on, to determine whether the vehicle is in a rainy environment.

The sensing device may alternatively determine the environment in which the terminal is located, based on both detection data of the sensing device, and detection data of another sensing device and/or a working status of another device.

For example, the terminal may be a vehicle, and the sensing device may include a camera and a radar. The radar may recognize content of an echo signal, and determine, with the help of an obstacle image captured by the camera, that the vehicle is in a close-to-obstacle environment. In this way, an environment can be recognized more accurately based on a plurality of pieces of data and/or information, avoiding incorrectly determining the environment in which the terminal is located due to inaccurate data of a single device.

Still another possible implementation of determining, by the sensing device, the environment in which the terminal is located is that: the sensing device may obtain environment information from a processing device of the terminal, where the environment information indicates the environment in which the terminal is located, and the sensing device may determine, based on the environment information, the environment in which the terminal is located.

The processing device may be configured on the terminal. The processing device may be an electronic device with information obtaining and processing functions, including but not limited to a computer, a single-chip microcomputer, or an on-board terminal. Alternatively, the processing device may be a component of an electronic device, such as a processor, a microprocessor, a chip, or a chip system. The processing device may generate environment information, and send the environment information to the sensing device.

For example, the processing device may obtain detection data of one or more sensing devices on the terminal and/or a working status of one or more components of the terminal, determine, based on the detection data and/or the working status, an environment in which the terminal is located, and generate corresponding environment information.

Optionally, a wired or wireless communication interface may be configured on the terminal. The processing device may communicate with the Internet through the interface to obtain a status of the environment in which the terminal is located. The processing device may generate environment information based on the obtained weather information. For example, the processing device may obtain, through the Internet, a weather forecast (that is, an example of weather information) of an area in which the terminal is currently located, and generate the environment information based on the weather forecast. For example, if the weather forecast that is of the area in which the terminal is currently located and that is obtained by the processing device through the Internet indicates a rainy day, the terminal device generates the environment information indicating that the environment in which the terminal is located is a rainy environment.

The sensing device may determine, based on the environment information obtained from the processing device, the environment in which the terminal is located. For example, if the environment information indicates that the environment in which the terminal is located is a rainy environment, the sensing device determines that the environment in which the terminal is located is the rainy environment; or if the environment information indicates that the environment in which the terminal is located is a close-to-obstacle environment, the sensing device determines that the environment in which the terminal is located is the close-to-obstacle environment.

The foregoing several possible implementations for determining an environment may be implemented separately, or may be implemented in combination. For example, the sensing device may obtain a current weather forecast, and obtain a working status of a wiper on the terminal. The sensing device may determine, based on both the working status of the wiper and the weather forecast, whether the terminal is in a rainy environment. For example, if the weather forecast indicates that current weather is rainy, and the status information of the wiper indicates that the wiper is turned on, the sensing device may determine that the terminal is in the rainy environment.

Optionally, the processing device may generate environment information based on both weather information obtained through the communication interface, and detection data of one or more sensing devices and/or a working status of one or more other devices on the terminal. For example, the terminal may be a vehicle. The processing device on the vehicle may obtain a current weather forecast through the Internet, and obtain a working status of a wiper on the vehicle. The processing device determines, based on both the working status of the wiper and the weather forecast, whether the vehicle is in a rainy environment, and generates corresponding environment information.

In this way, incorrect determination of the environment in which the terminal is located due to lagging and incorrect weather information obtained can be avoided.

It should be understood that the foregoing methods are merely examples, and the method for determining, by the sensing device, the environment in which the terminal is located is not limited in this application. The sensing device may alternatively determine, in other possible manners, the environment in which the terminal is located, which are not listed one by one herein.

Step 402: Determine, based on the environment, whether an obstruction that hinders the sensing device from transmitting or receiving a signal needs to be cleaned.

Based on the environment in which the terminal is located that is determined by the sensing device, whether the environment in which the terminal is located is a preset environment may be determined, to determine whether an obstruction that hinders the sensing device from transmitting or receiving a signal needs to be cleaned.

If the environment in which the terminal is located is the preset environment, it may be determined that the obstruction does not need to be cleaned.

For example, the preset environment may include a rainy environment, a close-to-obstacle environment, and the like. In a rainy environment, the sensing device is obstructed by rain, and the rain naturally evaporates and disappears after the sensing device is away from the rainy environment. In this case, the obstruction does not need to be cleaned. In a close-to-obstacle environment, the sensing device is obstructed by an obstacle, and the obstruction disappears after the terminal is away from the obstacle. In this case, the obstruction does not need to be cleaned.

It should be understood that the foregoing description of the preset environment is merely an example, and the preset environment in embodiments of this application is not limited thereto.

Step 403: Send indication information, where the indication information indicates whether the obstruction needs to be cleaned.

After determining whether the obstacle needs to be cleaned, the sensing device may generate the indication information. For example, if determining that the obstruction needs to be cleaned, the sensing device may send indication information indicating that the obstruction needs to be cleaned; or if determining that the obstruction does not need to be cleaned, the sensing device may send indication information indicating that the obstruction does not need to be cleaned.

The sensing device sends the indication information indicating whether the obstruction needs to be cleaned, so that the terminal can prompt the user to clean the obstruction that hinders the sensing device from transmitting or receiving a signal. As a result, the sensing device can restore detection performance and obtain an accurate detection result. For example, for a vehicle with an autonomous driving mode, based on indication information sent by a radar, an HMI of the vehicle may prompt the user that an obstruction on the radar needs to be cleaned, so that the user can clean the obstruction, restoring a measurement result of the radar to be accurate, and restoring the vehicle to be in the autonomous driving mode. This can improve user experience.

Optionally, the indication information may further indicate a degree to which the sensing device is obstructed by the obstruction. The sensing device may determine the degree to which the sensing device is obstructed, and send the indication information indicating the obstruction degree.

For example, if the sensing device determines that the sensing device is not obstructed, the indication information may indicate that the sensing device is not obstructed; if the sensing device determines that the sensing device is partially obstructed and determines that the obstruction needs to be cleaned, the indication information may indicate that the sensing device is partially obstructed and the obstruction needs to be cleaned; if the sensing device determines that the sensing device is partially obstructed and determines that the obstruction does not need to be cleaned, the indication information may indicate that the sensing device is partially obstructed and the obstruction does not need to be cleaned; if the sensing device determines that the sensing device is fully obstructed and determines that the obstruction needs to be cleaned, the indication information may indicate that the sensing device is fully obstructed and the obstruction needs to be cleaned; or if the sensing device determines that the sensing device is fully obstructed and determines that the obstruction does not need to be cleaned, the indication information may indicate that the sensing device is fully obstructed and the obstruction does not need to be cleaned.

In a possible implementation, the sensing device may indicate different information by carrying different values in a predefined field, to obtain the indication information. Correspondences between different values and information indicated by the different values may be predefined. Table 1 is an example of the correspondences.

**Table 1**

| Value | Meaning |
|---|---|
| 0 | There is no need to clean an obstruction |
| 1 | There is a need to clean an obstruction |

It should be understood that the foregoing is merely an example. A correspondence between a predefined value and indicated information is not limited in this application, and a specific form of the indication information generated by the sensing device is not limited.

The sensing device may send the indication information to the processing device. The processing device may be configured on the terminal, or may be a device separated from the terminal. After receiving the indication information, the processing device may output an instruction for prompting the user.

In some embodiments, the terminal is a vehicle equipped with an HMI (an example of the processing device). The sensing device may send the indication information to the HMI. The HMI may generate, based on the indication information, an instruction for prompting the user.

In some embodiments, an autonomous driving system is installed in the terminal, and the sensing device belongs to the autonomous driving system. The sensing device may send the indication information to a control unit (another example of the processing device) of the autonomous driving system. After receiving the indication information, the control unit may generate and/or output an instruction for prompting the user.

Based on the foregoing content, the sensing device may determine, based on the environment in which the terminal is located, whether the obstruction needs to be cleaned, and send the indication information indicating whether the obstruction needs to be cleaned, so that the user may be prompted to clean the obstruction that hinders the sensing device from transmitting or receiving a signal, thereby avoiding interference on a detection result of the sensing device. As a result, detection performance of the sensing device can be restored, and therefore an accurate detection result can be obtained, providing support for driving safety, and assisting the vehicle in autonomous driving, thereby improving user experience.

In some embodiments, the indication information sent by the sensing device may further indicate whether the sensing device is obstructed and indicate an obstruction degree.

Optionally, the sensing device may determine, based on the environment in which the terminal is located and whether the sensing device is obstructed by the obstruction, whether the obstruction that hinders the sensing device from transmitting or receiving a signal needs to be cleaned.

The following provides examples of several possible implementations of determining, by the sensing device, whether the sensing device is obstructed.

In a possible implementation, the sensing device may be a camera. A plurality of consecutive frames of original images obtained by a lens of the camera within preset time may be detected, regions having same or similar pixel values in the original images may be recognized and determined as a target region, and whether the lens of the camera is obstructed may be determined based on the movement of the target region in the plurality of frames of original images. When the target region in the plurality of frames of original images does not move, it may be determined that the camera is obstructed by an obstruction. When the target region in the plurality of frames of original images moves, it may be determined that the camera is not obstructed by an obstruction. After it is determined that the camera is obstructed by the obstruction, an obstruction degree may be determined based on whether a quantity of pixels in the target region is a preset value.

In another possible implementation, the sensing device may be a radar. Echo signals of the radar with different obstruction degrees may be collected in a same scenario to construct a training data set. Next, iterative optimization training is performed on a neural network by using the training data set, to obtain a trained neural network. Then, real-time echo signals of the radar are tested based on the trained neural network, to obtain obstruction degree data of the radar. The obstruction degree data of the radar may be compared with a predefined data value, to determine whether the radar is obstructed, or to determine a degree to which the radar is obstructed.

In still another possible implementation, the sensing device may be a radar. Whether the radar is obstructed may be determined based on a strength of an echo signal received by the radar within predefined time after a signal is transmitted. If the strength of the echo signal is greater than a predefined strength threshold, it is determined that the radar is obstructed by an obstruction. If the strength of the echo signal is less than the strength threshold, it is determined that the radar is not obstructed.

In some embodiments, the sensing device may also determine, with the help of data of another sensing device, a degree to which the sensing device is obstructed by the obstruction.

For a specific implementation of determining, by the sensing device, whether the sensing device is obstructed and the obstruction degree, refer to another implementation in the conventional technology. The foregoing examples are merely for ease of understanding, and shall not constitute any limitation on this application.

For example, the sensing device may represent, by using a plurality of obstruction degree levels (levels for short), a degree to which the sensing device is obstructed. For example, the obstruction degree may be categorized into two levels: no obstruction and obstruction; or may be categorized into three levels: no obstruction, partial obstruction, and severe obstruction; or may be categorized into four levels: no obstruction, slight obstruction, severe obstruction, and full obstruction; or may be categorized into any other predefined levels that represent different obstruction degrees. This is not limited in this application.

It should be understood that an obstruction degree level is not limited to the levels listed above, and the obstruction degree may alternatively be directly represented by using different level numbers. For example, the obstruction degree is gradually severer in ascending order. For example, "level 1" represents "no obstruction", "level 2" represents "partial obstruction", and "level 3" represents "full obstruction". In another example, "level 1" represents "no obstruction", "level 2" represents "slight obstruction", "level 3" represents "severe obstruction", and "level 4" represents "full obstruction", and so on, which are not listed herein.

In addition, a sequence of determining an environment and determining an obstruction degree by the sensing device is not limited in this application.

In a possible implementation, the sensing device may first determine an environment in which the terminal is located, and then detect a degree to which the sensing device is obstructed by an obstruction.

For example, the sensing device may detect, in real time, the environment in which the terminal is located, detect, after determining that the environment in which the terminal is located is not a preset environment, the degree to which the sensing device is obstructed by the obstruction, and determine, after determining that the obstruction degree is that the sensing device is obstructed, that there is a need to deal with the obstruction. After determining that the environment in which the terminal is located is the preset environment, the sensing device may determine that there is no need to deal with the obstruction. In this case, the degree to which the sensing device is obstructed by the obstruction may not be detected temporarily.

The sensing device first determines the environment in which the terminal is located, so that whether to detect the degree to which the sensing device is obstructed by the obstruction can be determined based on the environment in which the terminal is located. When the environment in which the terminal is located is the preset environment, obstruction detection may not be performed, so that processing resources can be saved.

In another possible implementation, the sensing device may first detect a degree to which the sensing device is obstructed by an obstruction, and after determining that the obstruction degree is that the sensing device is obstructed, determine whether an environment in which the terminal is located is a preset environment, and determine whether the obstruction needs to be cleaned.

For example, the sensing device may detect, in real time, the degree to which the sensing device is obstructed by the obstruction, detect, after determining that the sensing device is obstructed by the obstruction, the environment in which the terminal is located, and determine, when determining that the terminal is in the preset environment, that the obstruction does not need to be cleaned. When determining that the sensing device is obstructed by the obstruction and determining that the terminal is not in the preset environment, the sensing device determines that the obstruction needs to be cleaned.

When determining that the obstruction degree is that the sensing device is not obstructed by the obstruction, the sensing device determines that the obstruction does not need to be cleaned. In this case, the sensing device may not detect the environment in which the terminal is located.

It should be understood that detecting, by the sensing device, the degree to which the sensing device is obstructed by the obstruction and detecting, by the sensing device, the environment in which the terminal is located may be interchanged in a sequence, or may be performed simultaneously. This is not limited in this application.

After determining the obstruction degree and whether the obstruction needs to be cleaned, the sensing device may generate the indication information. For example, the sensing device may indicate different information by carrying different values in a predefined field, to obtain the indication information. The field that indicates the obstruction degree and the foregoing field that indicates whether the obstacle needs to be cleaned may be a same field, or may be different fields.

The following shows several examples of indicating the obstruction degree and whether the obstacle needs to be cleaned by using a same field.

If the obstruction degree and whether the obstacle needs to be cleaned are indicated by using the same field, the foregoing correspondences may be extended, and more correspondences between different values and information indicated by the different values may be predefined.

Table 2 is another example of the correspondences.

**Table 2**

| Value | Meaning |
|---|---|
| 00 | No obstruction |
| 01 | Partial obstruction: There is no need to clean an obstruction |
| 02 | Full obstruction: There is no need to clean an obstruction |
| 11 | Partial obstruction: There is a need to clean an obstruction |
| 12 | Full obstruction: There is a need to clean an obstruction |

In the correspondences shown in Table 2, the obstruction degree includes three levels: no obstruction, partial obstruction, and full obstruction.

Table 3 is still another example of the correspondences.

**Table 3**

| Value | Meaning |
|---|---|
| 00 | No obstruction |
| 01 | Slight obstruction: There is no need to clean an obstruction |
| 02 | Severe obstruction: There is no need to clean an obstruction |
| 03 | Full obstruction: There is no need to clean an obstruction |
| 11 | Slight obstruction: There is a need to clean an obstruction |
| 12 | Severe obstruction: There is a need to clean an obstruction |
| 13 | Full obstruction: There is a need to clean an obstruction |

In the correspondences shown in Table 3, the obstruction degree includes four levels: no obstruction, slight obstruction, severe obstruction, and full obstruction.

It should be understood that the obstruction degree may include any plurality of levels, and correspondences corresponding to the levels may also be correspondingly extended. Details are not described herein again.

In some other embodiments, the obstruction degree of the sensing device and whether the obstruction needs to be cleaned may be indicated in two pieces of indication information. The two pieces of indication information may be carried by same signaling, or may be carried by different signaling. This is not limited in this application.

Based on the foregoing solution, the indication information indicates whether the sensing device is obstructed and the obstruction degree, so that the terminal can make a proper decision. For example, a vehicle with an autonomous driving function may adjust different driving levels based on different obstruction degrees. Different obstruction degrees may also help the user select a manner of dealing with the obstruction. For example, for a low obstruction degree, although the user may be prompted to deal with the obstruction, the user may also select whether to deal with the obstruction immediately. In this case, the indication information may provide more abundant information, to help the terminal make a more proper decision, improving user experience to a greater extent.

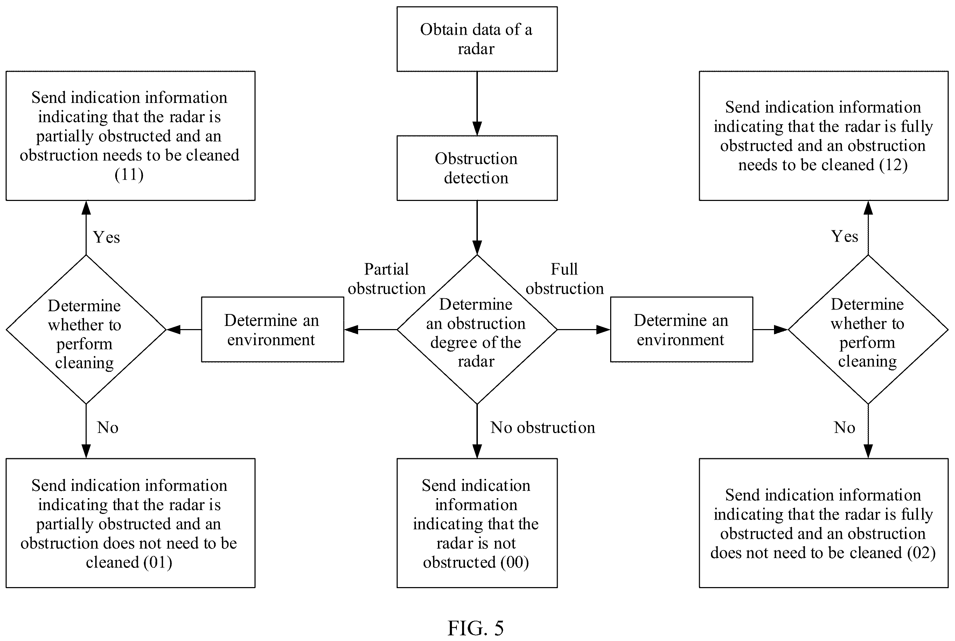

For ease of understanding, the following describes, with reference to FIG. 5, the method provided in embodiments of this application using a radar (an example of the sensing device) as an execution body. The radar may be a radar configured on a vehicle. The vehicle has an autonomous driving function, and the radar may be configured to assist the vehicle in autonomous driving.

As shown in FIG. 5, to ensure safety of autonomous driving, the radar may perform, in real time, obstruction detection on content of original data obtained by the radar, and determine a degree to which the radar is obstructed by an obstruction. For example, the radar may test a real-time echo signal based on a predefined neural network, to obtain obstruction degree data, and compare the obstruction degree data with a predefined data value, to determine the obstruction degree. The obstruction degree determined by the radar may be one of predefined obstruction degree levels.

The predefined levels may include three levels: no obstruction, partial obstruction, and full obstruction.

When determining that the obstruction degree is no obstruction, the radar may send indication information indicating that the radar is not obstructed. The indication information may be represented by a value "00".

When the radar determines that the obstruction degree is partial obstruction or full obstruction, the radar may determine an environment in which the vehicle is located, and determine, based on the environment, whether an obstruction needs to be cleaned. A method for determining, by the radar, the environment in which the vehicle is located is described as in step 401, and details are not described herein again.

After the radar determines that the environment in which the vehicle is located is a preset environment, the radar may determine that the obstruction does not need to be cleaned.

If the obstruction degree is partial obstruction, the radar may send indication information indicating that the radar is partially obstructed and the obstruction does not need to be cleaned. The indication information may be represented by a value "01".

If the obstruction degree is full obstruction, the radar may send indication information indicating that the radar is fully obstructed and the obstruction does not need to be cleaned. The indication information may be represented by a value "02".

After the radar determines that the environment in which the vehicle is located is not a preset environment, the radar may determine that the obstruction needs to be cleaned.

If the obstruction degree is partial obstruction, the radar may send indication information indicating that the radar is partially obstructed and the obstruction needs to be cleaned. The indication information may be represented by a value "11".

If the obstruction degree is full obstruction, the radar may send indication information indicating that the radar is fully obstructed and the obstruction needs to be cleaned. The indication information may be represented by a value "12".

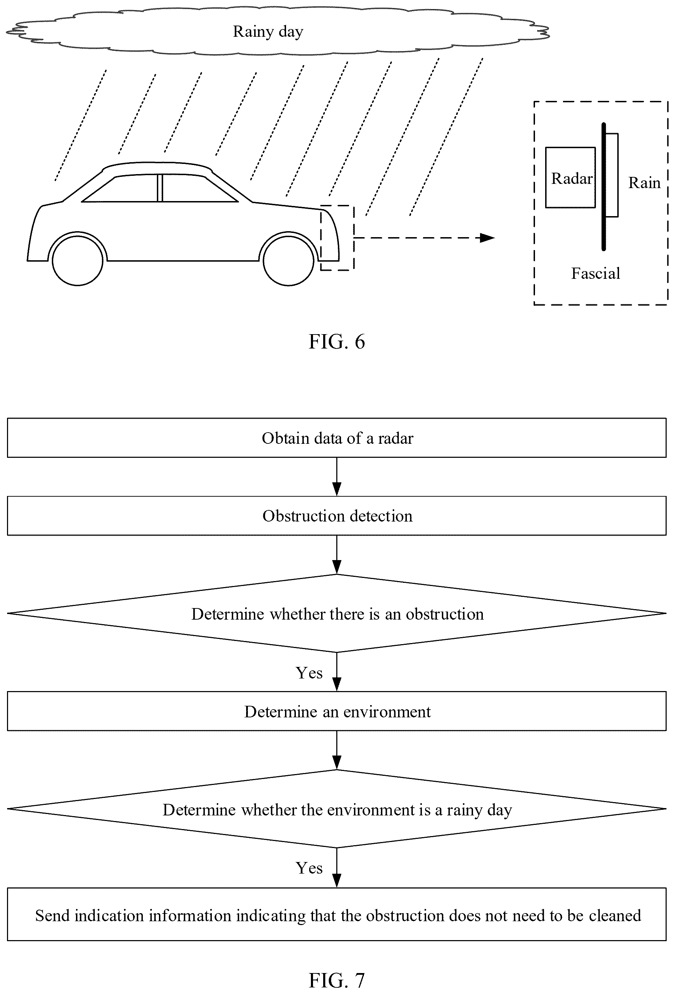

Specifically, if the vehicle is in a rainy environment, as shown in FIG. 6, the radar is obstructed by rain, but the rain naturally disappears after the vehicle moves away from the rainy environment. In this case, the obstruction does not need to be cleaned. The radar may perform obstruction detection. As shown in FIG. 7, the radar determines, during obstruction detection, that the radar is obstructed by an obstruction, and determines, when determining an environment in which the vehicle is located, that the environment is a rainy environment. In this case, the radar sends indication information indicating that the obstruction does not need to be cleaned.

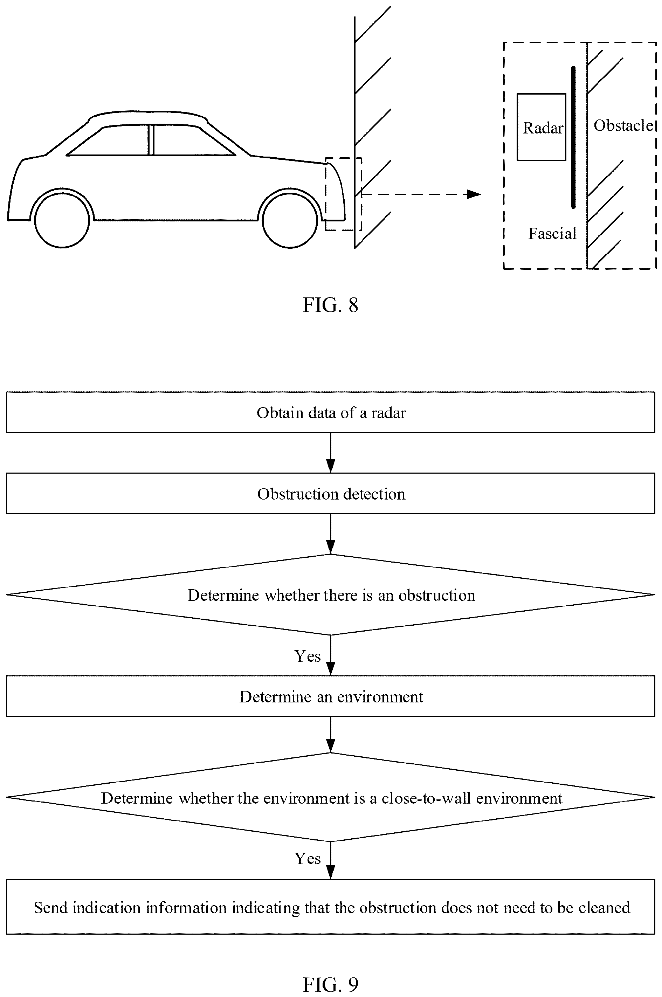

If the vehicle is in a close-to-obstacle environment, as shown in FIG. 8, the radar is obstructed by an obstacle, but an obstruction caused by the obstacle disappears after the vehicle moves away from the obstacle. In this case, the obstruction does not need to be cleaned. The radar may perform obstruction detection. As shown in FIG. 9, the radar determines, during obstruction detection, that the radar is obstructed by an obstruction, and determines, when determining an environment in which the vehicle is located, that the environment is a close-to-obstacle environment. In this case, the radar sends indication information indicating that the obstruction does not need to be cleaned.

The radar may determine, based on the environment in which the vehicle is located, whether the obstruction needs to be cleaned, and send the corresponding indication information. In this way, a suggestion for cleaning the obstruction can be output to a user, to help the user determine whether the obstruction needs to be cleaned. The user may not need to clean the obstruction in an environment in which the obstruction does not need to be cleaned, and the user may choose to clean the obstruction in an environment in which the obstruction needs to be cleaned, thereby improving user experience. After the user cleans the obstruction based on the indication, the radar can restore detection performance, so that the vehicle can restore the autonomous driving function in time.

It should be understood that the method shown in FIG. 5 is merely an example of this application, and cannot constitute a limitation on this application.

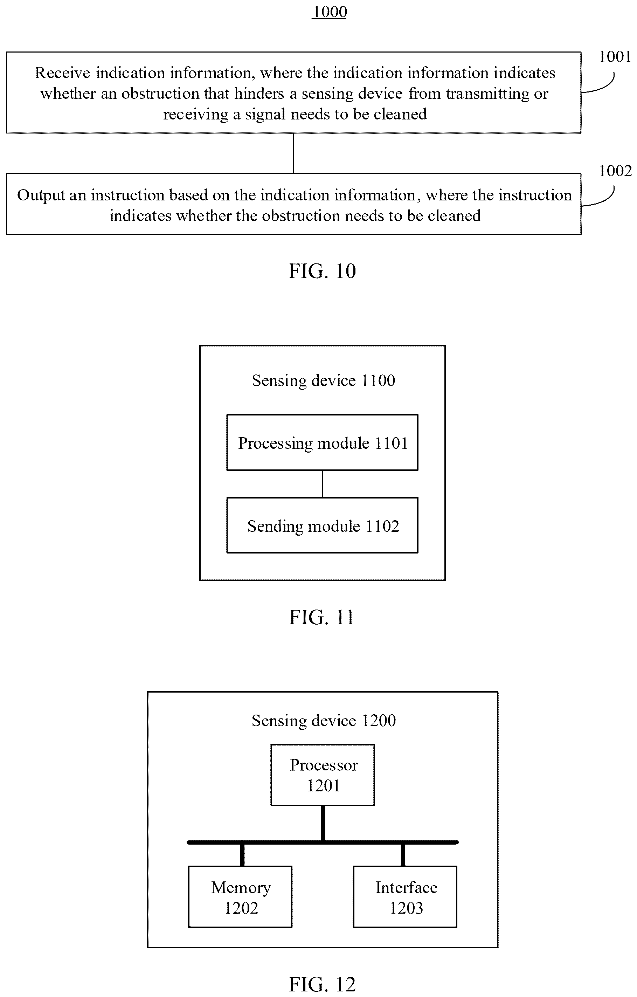

The foregoing describes the information indication method provided in embodiments of this application with reference to the accompanying drawings. The following describes an information processing method provided in embodiments of this application with reference to FIG. 10.

The method shown in FIG. 10 may be performed by a processing device, or may be performed by a component (such as a chip, a chip system, or a processor) in a processing device. This is not limited in this application.

The following is merely an example that describes the method provided in embodiments of this application using the processing device as an execution body.

The method 1000 shown in FIG. 10 includes step 1001 and step 1002. The following describes step 1001 and step 1002 in detail.

Step 1001: Receive indication information, where the indication information indicates whether an obstruction that hinders a sensing device from transmitting or receiving a signal needs to be cleaned.

Optionally, the indication information received by the processing device may further indicate a degree to which the sensing device is obstructed by the obstruction.

It should be understood that the indication information received by the processing device corresponds to the indication information sent by the sensing device in the method 400. The content indicated by the indication information and the form of the indication information are described in detail in the method 400, and details are not described herein again.

Step 1002: Output an instruction based on the indication information, where the instruction indicates whether the obstruction needs to be cleaned.

The processing device may process the indication information, generate the instruction, and output the instruction by using an output device. The output device may be configured on the terminal, or may be an output device separated from the terminal. The output device includes but is not limited to a display or a speaker.

In a possible implementation, after receiving the indication information, the processing device may match content indicated by the indication information in a predefined database, generate the instruction indicating the corresponding content, and output the instruction through the output device.

Optionally, the instruction generated by the processing device may be a text instruction.

For example, the processing device may be an HMI of a vehicle, and the received indication information may be a value shown in Table 2. After receiving the indication information, the HMI may match a meaning corresponding to the value in a predefined database, generate a corresponding text instruction, and display the text instruction through a display.

Optionally, the instruction generated by the processing device may be a voice instruction.

For example, the processing device may be an MCU of a vehicle, and the received indication information may be a value shown in Table 2. After receiving the indication information, the MCU may match a meaning corresponding to the value in a predefined database, generate a corresponding voice instruction, and play the voice instruction through a speaker of the vehicle.

It should be understood that a specific form of the instruction generated by the processing device is not limited in this application, and a form or quantity of output devices is not limited. The instruction output by the output device may include but is not limited to a text, a sound, a picture, or another form. For example, information indicating an obstruction degree may be output in a predefined picture indicating a percentage or in a text form, and information indicating whether an obstruction needs to be cleaned may be output in a predefined symbol.

After the indication information is processed, output may be performed in a form that is easily understood by the user, and the user may easily determine, based on the output instruction, whether the obstruction that hinders the sensing device from transmitting or receiving a signal needs to be cleaned. This can improve user experience.

Based on the foregoing content, the sensing device may determine, based on the environment in which the terminal is located, whether the obstruction needs to be cleaned, and output the indication information indicating whether the obstruction needs to be cleaned, and the processing device may output the indication information in the instruction that is easily understood by the user. In this way, the user can conveniently determine, based on the instruction, whether the obstruction needs to be cleaned. In an environment in which the obstruction does not need to be cleaned, the user can know that the obstruction does not need to be cleaned, thereby improving user experience. When the obstruction needs to be cleaned, the user can know the information based on the instruction, and clean the obstruction, avoiding interference on a detection result of the sensing device, so that detection performance of the sensing device can be restored, and therefore an accurate detection result can be obtained, providing support for driving safety, and assisting the vehicle in autonomous driving, thereby improving user experience.

In addition, after receiving the indication information, the processing device may further determine a processing policy and control a processing behavior. For example, the terminal may be a vehicle with a plurality of autonomous driving levels, and the processing device may be an MCU in an autonomous driving system of the vehicle. After receiving the indication information sent by the sensing device, the MCU may choose, based on different obstruction degrees indicated by the indication information, to lower or raise the autonomous driving level. In this way, an autonomous driving function of the vehicle can be more intelligent, thereby improving user experience.

In another example, the terminal may be an intelligent robot, and the processing device may be a processor configured on the intelligent robot. After receiving the indication information that is sent by the sensing device and that indicates that the obstruction that hinders the sensing device from transmitting or receiving a signal needs to be cleaned, the processor may control a component of the intelligent robot to clean the obstruction. In this way, the terminal can accurately determine and automatically clean the obstruction, thereby improving user experience.

The foregoing describes in detail the methods provided in embodiments of this application with reference to FIG. 4 to FIG. 10. The following describes in detail related apparatuses provided in embodiments of this application with reference to FIG. 11 to FIG. 14.

FIG. 11 is a block diagram of a sensing device according to an embodiment of this application. The sensing device may be configured on a terminal, and may perform the method shown in FIG. 4 by using components included in the sensing device. As shown in FIG. 11, the sensing device 1100 may include a processing module 1101 and a sending module 1102.

The processing module 1101 is configured to determine an environment in which the terminal is located. The processing module 1101 is further configured to determine, based on the environment, whether an obstruction that hinders the sensing device 1100 from transmitting or receiving a signal needs to be cleaned. The sending module 1102 is configured to send indication information, where the indication information indicates whether the obstruction needs to be cleaned.

Optionally, the processing module 1101 is specifically configured to determine, based on the environment in which the terminal is located when the sensing device 1100 is obstructed, whether the obstruction that hinders the sensing device 1100 from transmitting or receiving a signal needs to be cleaned.

The processing module 1101 of the sensing device 1100 may be further configured to determine a degree to which the sensing device is obstructed by the obstruction. The degree to which the sensing device is obstructed by the obstruction may indicate whether the sensing device is obstructed by the obstruction. Alternatively, the sensing device 1100 may include a second processing module configured to determine a degree to which the sensing device is obstructed by the obstruction.

Optionally, the processing module 1101 is specifically configured to determine, when the sensing device 1100 is obstructed by the obstruction, the environment in which the terminal is located.

Optionally, the indication information further indicates a degree to which the sensing device is obstructed by the obstruction.

Optionally, the indication information may indicate one of the following:
the sensing device is not obstructed;
the sensing device is partially obstructed, and the obstruction needs to be cleaned;
the sensing device is partially obstructed, and the obstruction does not need to be cleaned;
the sensing device is fully obstructed, and the obstruction needs to be cleaned; or
the sensing device is fully obstructed, and the obstruction does not need to be cleaned.

Optionally, the terminal is a vehicle, and the vehicle is equipped with an HMI. The sending module 1102 is specifically configured to send the indication information to the HMI, where the indication information is for the HMI to generate an instruction for prompting a user.

Optionally, the sensing device 1100 belongs to an autonomous driving system of the terminal. The sending module 1102 is specifically configured to send the indication information to a control unit of the autonomous driving system.

Optionally, the processing module 1102 is specifically configured to determine, when the environment in which the terminal is located is a preset environment, that the obstruction that hinders the sensing device 1100 from transmitting or receiving a signal does not need to be cleaned.

Optionally, the preset environment may include a rainy environment; and the processing module 1102 is further configured to determine, based on a weather forecast and/or a working status of a wiper, that the environment in which the terminal is located is the rainy environment.

Optionally, the preset environment may include an environment of parking close to an obstacle, and the terminal may be equipped with one or more sensing devices; and the processing module 1102 is further configured to determine, based on information about the environment sensed by the one or more sensing devices, that the environment in which the terminal is located is the environment of parking close to the obstacle.

Optionally, the sensing device 1100 is a radar.

FIG. 12 is another block diagram of a sensing device according to an embodiment of this application. The sensing device 1200 may be configured on a terminal. The sensing device 1200 may be configured to implement functions of the sensing device in the foregoing method embodiments. The sensing device 1200 may be a radar, or may be a component configured in a radar, for example, a chip system. In embodiments of this application, the chip system may include a chip, or may include a chip and another discrete device.

As shown in FIG. 12, the sensing device 1200 may include at least one processor configured to implement a function of the sensing device in the method provided in embodiments of this application.

When the device 1200 is configured to implement the functions of the sensing device in the method provided in embodiments of this application, the processor 1201 may be configured to determine an environment in which the terminal is located, and may be further configured to determine, based on the environment, whether an obstruction that hinders the sensing device 1200 from transmitting or receiving a signal needs to be cleaned.

The sensing device 1200 further includes an interface 1203. The processor 1201 may send and receive data and/or information through the interface 1203, and may be configured to implement the method performed by the sensing device in the embodiment corresponding to FIG. 4.

The sensing device 1200 may further include at least one memory 1202 configured to store program instructions and/or data. The memory 1202 is coupled to the processor 1201. The coupling in embodiments of this application may be an indirect coupling or a communication connection between apparatuses, units, or modules in an electrical form, a mechanical form, or another form, and is provided for information exchange between the apparatuses, units, or modules. The processor 1201 may operate in cooperation with the memory 1202, and the processor 1201 may execute program instructions stored in the memory 1202. The memory 1202 may alternatively be located in the processor 1201.

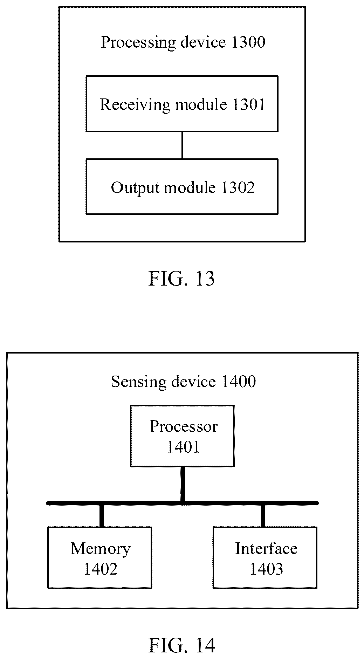

FIG. 13 is a block diagram of a processing device according to an embodiment of this application. The processing device may perform the method shown in FIG. 10 by using components included in the processing device. As shown in FIG. 13, the processing device 1300 may include a receiving module 1301 and an output module 1302.

The receiving module 1301 is configured to receive indication information, where the indication information indicates whether an obstruction that hinders a sensing device from transmitting or receiving a signal needs to be cleaned. The sensing device herein may correspond to the sensing device in the foregoing method embodiments, for example, may be the sensing device 1100 or the sensing device 1200. The output module 1302 is configured to output an instruction based on the indication information, where the instruction indicates whether the obstruction needs to be cleaned.

Optionally, the indication information further indicates a degree to which the sensing device is obstructed by the obstruction, and the instruction further indicates the degree to which the sensing device is obstructed by the obstruction.

Optionally, the instruction is a text instruction, and the output module 1302 is specifically configured to: generate the text instruction based on the indication information; and display the text instruction through a display. It should be understood that the processing device 1300 may be equipped with a display, and the output module 1302 may output the text instruction through the display; or the output module may output the text instruction through a display independent of the processing device.

Optionally, the instruction is a language instruction, and the output module 1302 is specifically configured to: generate the voice instruction based on the indication information; and play the voice instruction through a speaker. It should be understood that the processing device 1300 may be equipped with a speaker, and the output module 1302 may output the voice instruction through the speaker; or the output module may output the voice instruction through a speaker independent of the processing device.

FIG. 14 is another block diagram of a processing device according to an embodiment of this application. The processing device 1400 may be configured on a terminal. The processing device 1400 may be configured to implement functions of the processing device in the foregoing method embodiments.

As shown in FIG. 14, the processing device 1400 may include a processor 1401 and an interface 1403. The processor 1401 may control the interface 1403, to implement the functions of the processing device in the method provided in embodiments of this application. For example, the processor 1401 may control the interface 1403 to receive indication information, and output an instruction based on the indication information.

The processing device 1400 may further include at least one memory 1402 configured to store program instructions and/or data. The memory 1402 is coupled to the processor 1401. The processor 1401 may operate in cooperation with the memory 1402, and the processor 1401 may execute program instructions stored in the memory 1402. The memory 1402 may alternatively be located in the processor 1401.

It should be understood that module division in embodiments of this application is an example, and is only logical function division. During actual implementation, there may be another division manner. For example, the sensing device 1100 may include two processing modules. One processing module is configured to determine an environment in which a terminal is located, and the other processing module is configured to determine whether an obstruction that hinders the sensing device from transmitting or receiving a signal needs to be cleaned. In addition, functional modules in embodiments of this application may be integrated into one processor, or may exist alone physically, or two or more modules may be integrated into one module. The integrated module may be implemented in a form of hardware, or may be implemented in a form of a software functional module.

An embodiment of this application further provides a radar. The radar includes a memory and a processor. The memory is configured to store program code. The processor is configured to call the program code to implement the method in the embodiment shown in FIG. 4.

An embodiment of this application further provides an autonomous driving system. The autonomous driving system includes the foregoing sensing device. Optionally, the autonomous driving system may further include the foregoing processing device.

An embodiment of this application further provides a terminal device. The terminal device includes the foregoing sensing device and processing device. Alternatively, the terminal device includes the foregoing autonomous driving system. Optionally, the terminal device is a vehicle.

This application further provides a chip system. The chip system includes at least one processor configured to implement functions involved in the method performed by the sensing device in the embodiment shown in FIG. 4, or implement functions involved in the method performed by the processing device in the embodiment shown in FIG. 10, for example, receive or process data and/or information involved in the foregoing method.

In a possible design, the chip system further includes a memory. The memory is configured to store program instructions and data. The memory is located inside or outside the processor.

This application further provides a computer program product. The computer program product includes a computer program (which may also be referred to as code or instructions). When the computer program is run, a computer is enabled to perform the method performed by the sensing device or the method performed by the processing device in the foregoing embodiments.

This application further provides a computer-readable storage medium. The computer-readable storage medium stores a computer program (which may also be referred to as code or instructions). When the computer program is run, a computer is enabled to perform the method performed by the sensing device or the method performed by the processing device in the foregoing embodiments.

It should be noted that the processor in embodiments of this application may be an integrated circuit chip, and has a signal processing capability. In an implementation process, the steps in the foregoing method embodiments may be implemented by using a hardware integrated logic circuit in the processor, or by using instructions in a form of software.

The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor or the like.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, RAMs in many forms may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the method and apparatus described in this application is intended to include but is not limited to these memories and any memory of another appropriate type.

All or some of the methods provided in the foregoing embodiments may be implemented by software, hardware, firmware, or any combination thereof. When implemented by software, all or some of the methods may be implemented in a form of a computer program product. The computer program product may include one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a compact disc (compact disc, CD) or a digital versatile disc (digital versatile disc, DVD)), a semiconductor medium (for example, a solid state disk (solid state disk, SSD)), or the like.

A person of ordinary skill in the art may be aware that, in combination with the examples described in embodiments disclosed in this specification, modules and method steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In several embodiments provided in this application, it should be understood that the disclosed system, apparatus, and method may be implemented in another manner. For example, the described apparatus embodiments are merely examples. For example, module division is merely logical function division and may be other division during actual implementation. For example, a plurality of modules or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

**In** addition, functional modules in embodiments of this application may be integrated into one processing unit, or each of the modules may exist alone physically, or two or more modules may be integrated into one unit.

When the functions are implemented in the form of a software functional unit and sold or used as an independent product, the functions may be stored in a computer-readable storage medium. Based on such understanding, the technical solutions in this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information indication method, applied to a sensing device, wherein the sensing device is configured on a terminal, and the method comprises:
determining an environment in which the terminal is located;
determining, based on the environment, whether an obstruction that hinders the sensing device from transmitting or receiving a signal needs to be cleaned; and
sending indication information, wherein the indication information indicates whether the obstruction needs to be cleaned.

2. The method according to claim 1, wherein the determining, based on the environment, whether an obstruction that hinders the sensing device from transmitting or receiving a signal needs to be cleaned comprises:
determining, based on the environment when the sensing device is obstructed, whether the obstruction that hinders the sensing device from transmitting or receiving a signal needs to be cleaned.

3. The method according to claim 2, wherein the determining an environment in which the terminal is located comprises:
determining, when the sensing device is obstructed by the obstruction, the environment in which the terminal is located.

4. The method according to any one of claims 1 to 3, wherein the indication information further indicates a degree to which the sensing device is obstructed by the obstruction.

5. The method according to claim 4, wherein the indication information indicates one of the following:
the sensing device is not obstructed;
the sensing device is partially obstructed, and the obstruction needs to be cleaned;
the sensing device is partially obstructed, and the obstruction does not need to be cleaned;
the sensing device is fully obstructed, and the obstruction needs to be cleaned; or
the sensing device is fully obstructed, and the obstruction does not need to be cleaned.

6. The method according to any one of claims 1 to 5, wherein the terminal is a vehicle, and the vehicle is equipped with a human-machine interface HMI; and
the sending indication information comprises:
sending the indication information to the HMI, wherein the indication information is for the HMI to generate an instruction for prompting a user.

7. The method according to any one of claims 1 to 5, wherein the sensing device belongs to an autonomous driving system of the terminal; and
the sending indication information comprises:
sending the indication information to a control unit of the autonomous driving system.

8. The method according to any one of claims 1 to 7, wherein the determining, based on the environment, whether an obstruction that hinders the sensing device from transmitting or receiving a signal needs to be cleaned comprises:
determining, when the environment is a preset environment, that the obstruction that hinders the sensing device from transmitting or receiving a signal does not need to be cleaned.

9. The method according to claim 8, wherein the preset environment comprises a rainy environment; and
the method further comprises:
determining, based on a weather forecast and/or a working status of a wiper, that the environment in which the terminal is located is the rainy environment.

10. The method according to claim 8, wherein the preset environment comprises an environment of parking close to an obstacle, and the terminal is equipped with one or more sensing devices; and
the method further comprises:
determining, based on information about the environment sensed by the one or more sensing devices, that the environment in which the terminal is located is the environment of parking close to the obstacle.

11. An information processing method, wherein the method comprises:
receiving indication information, wherein the indication information indicates whether an obstruction that hinders a sensing device from transmitting or receiving a signal needs to be cleaned; and
outputting an instruction based on the indication information, wherein the instruction indicates whether the obstruction needs to be cleaned.

12. The method according to claim 11, wherein the indication information further indicates a degree to which the sensing device is obstructed by the obstruction, and the instruction further indicates the degree to which the sensing device is obstructed by the obstruction.

13. The method according to claim 11 or 12, wherein the instruction is a text instruction, and the outputting an instruction based on the indication information comprises:
generating the text instruction based on the indication information; and
displaying the text instruction through a display.

14. The method according to claim 11 or 12, wherein the instruction is a voice instruction, and the outputting an instruction based on the indication information comprises:
generating the voice instruction based on the indication information; and
playing the voice instruction through a speaker.

15. A sensing device, wherein the sensing device is configured on a terminal, and the sensing device comprises:
a processing module, configured to determine an environment in which the terminal is located, and further configured to determine, based on the environment, whether an obstruction that hinders the sensing device from transmitting or receiving a signal needs to be cleaned; and
a sending module, configured to send indication information, wherein the indication information indicates whether the obstruction needs to be cleaned.

16. The sensing device according to claim 15, wherein the sensing device is a radar.

17. A processing device, comprising:
a receiving module, configured to receive indication information, wherein the indication information indicates whether an obstruction that hinders a sensing device from transmitting or receiving a signal needs to be cleaned; and
an output module, configured to output an instruction based on the indication information, wherein the instruction indicates whether the obstruction needs to be cleaned.

18. An autonomous driving system, comprising the sensing device according to claim 15 or 16.

19. A terminal device, comprising the sensing device according to claim 15 or 16 and the processing device according to claim 17.

20. A computer-readable storage medium, storing a computer program, wherein when the computer program is run, the method according to any one of claims 1 to 14 is performed.

21. A computer program product, comprising a computer program, wherein when the computer program is run, the method according to any one of claims 1 to 14 is performed.
